# EUROPÄISCHE PATENTSCHRIFT

(11) **EP 3 163 696 B1**
(45) Veröffentlichungstag und Bekanntmachung des Hinweises auf die Patenterteilung: **12.06.2019**
(21) Anmeldenummer: 15191973.5
(22) Anmeldetag: 28.10.2015
(51) Int. Cl.: H02G 1/12

(54) **ABISOLIERKOPF UND VERFAHREN ZU DESSEN BETRIEB**
STRIPPING HEAD AND METHOD OF OPERATING THE SAME
TÊTE DE DÉNUDAGE ET SON PROCÉDÉ DE FONCTIONNEMENT

(43) Veröffentlichungstag der Anmeldung: 03.05.2017
(73) Patentinhaber: Schleuniger Holding AG, 3608 Thun (CH)
(72) Erfinder: APPENZELLER, Reto, 3603 Thun (CH)
(74) Vertreter: Patentbüro Paul Rosenich AG

(56) Entgegenhaltungen:
- EP-B1- 0 195 932
- WO-A1-03/100935
- WO-A1-2005/046015
- WO-A2-2010/061303

## Beschreibung

Die Erfindung betrifft eine Vorrichtung zum Entfernen wenigstens einer Lage der Umhüllung von elektrischen Leitern oder Lichtleitern, gemäss dem Oberbegriff des Patentanspruches 1.

Eine derartige Vorrichtung weist zumindest zwei zum Leiter bewegbaren Spannbacken zur Fixierung des Leiters in Längsrichtung und einen rotativen Abisolierkopf auf, welcher zumindest ein um die Drehachse des Abisolierkopfes drehbares und radial in Bezug auf die Drehachse bewegbares Abisoliermesser zur Durchtrennung zumindest einer Lage der Umhüllung des Leiters und zumindest zwei in Bezug auf die Drehachse des Abisolierkopfes radial bewegbare und unmittelbar bei dem oder den Messer(n) angeordnete Zentrierbacken zur Zentrierung des Leiters in der Drehachse des Abisolierkopfes.

Die Erfindung betrifft auch ein Verfahren zum Betreiben einer derartigen Vorrichtung, gemäss dem Oberbegriff des Anspruches 12. Für die Durchführung dieser Verfahren ist die Vorrichtung zusätzlich im Innenbereich des Abisolierkopfes mit einem Anschlag für das Ende des Leiters als Auslöser für den Bearbeitungsvorgang versehen.

Die Verfahrensschritte umfassen das Klemmen des Leiters mittels der Spannbacken, wonach der Abisolierkopf in Rotation versetzt wird, sowie das Zentrieren des Leiters mittels der Zentrierbacken und das Einschneiden in die Umhüllung des Leiters mittels des zumindest einen Abisoliermessers.

Die WO 2010/061303 A2 zeigt eine Kabelschneid- und -abisoliermaschine für ein Koaxial - bzw. Lichtleiterendloskabel mit einer rotierenden Abisoliereinheit, bestehend aus zwei Schneidelementen und einer radial beweglichen Zentrierbackeneinheit. Beide Einheiten weisen eine Antriebseinheit auf. Die Zentriereinheiten sind in unmittelbarer Nähre der Schneidelemente angeordnet. Anstelle von Spannbacken zur Fixierung des Leiters sind Rollen vorhanden, die auch als axiale Fixierung wirken können.

Die EP 0195932 B1 offenbart die Zustellung der Zentrierbacken als auch der Messer einer Rotativeinheit über je einen axial verschiebbaren Konus, wobei dieser Konus direkt auf die den Messern abgewandten Enden achsparalleler Hebel einwirkt. Die Hebel sind zwar prinzipiell unabhängig voneinander bewegbar, auch in unterschiedlichem Ausmass, doch sind die Konen gekoppelt, wodurch beim Schliessen eine Relativbewegung der Messer gegenüber den Zentrierbacken erst nach dem Schliessen der Zentrierbacken und eine Öffnungsbewegung der Zentrierbacken erst nach dem Öffnen der Messer möglich ist. Eine unabhängige Betätigung von Zentrierbacken und Messerträgern ist hingegen nicht möglich.

In der WO 2006/1005690 A1 ist die Betätigung der Zentrierbacken und Messer über eine Anordnung koaxialer und mit dem Rotativkopf um dessen Achse beabstandet mitrotierender Wellen offenbart, welche über Steuerhebel betätigt werden, die ihrerseits über in axialer Richtung verschiebbarer Steuerkonen beaufschlagt werden. Der Steuerkonus für die die Messer tragende Welle wird motorisch betätigt und gesteuert, so dass die Messer beliebig weit geschlossen, d.h. an die Kabelachse herangeführt werden können. Der Steuerkonus für die Zentrierbacken weist als Antrieb eine Feder auf, die diese zweiten Steuerkonus dem ersten Steuerkonus für die Messer nachfolgen lässt, die Zentrierbacken jedoch mit einer durch die Federkonstante vorgegebenen Maximalkraft an das Kabel anpresst. Damit können einerseits die Zentrierbacken nur betätigt werden, wenn auch die Abisoliermesser an das Kabel geführt werden, und weiters ist die Betätigung der Zentrierbacken immer an die Betätigung der Messer gekoppelt, so dass keine wirkliche Unabhängigkeit der Betätigung von Zentrierung und Schneiden der Kabelisolierung gegeben ist.

Die voneinander unabhängige Wirkung von Zentrierbacken und Messern einer Rotativeinheit beim Abisolieren ist in der WO 2005046015 A1 offenbart. Die Betätigung sowohl der Zentrierbacken als auch der Messer wird über Scheiben mit Spiralführungen bewirkt, die durch Relativverdrehung die in feststehenden Führungen für die Backen bzw. Messern deren radiale Bewegung bewirken. Das gleiche Funktionsprinzip ist auch in der WO 9813907 A1 beschrieben. Diese Anordnungen sind durch die Rotativscheiben, in welchen die Messer und Zentrierbacken geführt sind, sehr klobig und erfordern aufgrund des grossen Durchmessers hohe Betätigungsmomente. Überdies sind für die Bewerkstelligung der relativen Drehbewegungen von jeweils vier scheibenförmigen Körpern - je zwei relativ zueinander verdrehbare Scheiben für Zentrierbacken bzw. Messer - zumindest drei Antriebe notwendig.Die Nutzung des Prinzips der axial bewegten Konen oder Keile, um eine radiale Bewegung oder ein radiales Moment zu bewirken, ist ebenfalls in der US 4638692 A bei einer Kabelklemmvorrichtung vorgesehen. Durch die Axialbewegung momentbeaufschlagter Keile selbst wird die Klemmung des Kabels bewirkt.

Schliesslich ist auch in der JP H0370412 A eine Abisoliereinheit dargestellt, bei der ein Schlitten mit einer Führung und Zentrierung für das Kabel unabhängig von der Bewegung der Schneidvorrichtung vorgesehen ist.

Die Aufgabe der vorliegenden Erfindung war daher eine Vorrichtung zum Entfernen wenigstens einer Lage der Umhüllung von elektrischen Leitern oder Lichtleitern wie eingangs beschrieben, die bei geringerer Baugrösse und geringem Aufwand für Anzahl und Dimensionierung der Antriebe eine vollständig unabhängige Betätigung von Zentrierbacken und Messern ermöglich und derart die Anwendungsmöglichkeiten der Vorrichtung beträchtlich erweitert. Eine weitere Aufgabe war ein Verfahren zum Betreiben einer derartigen Vorrichtung.

Die Aufgabe wird durch die Merkmale der unabhängigen Ansprüche gelöst. Vorteilhafte Weiterbildungen sind in den Figuren und in den abhängigen Patentansprüchen dargelegt.

Zur Lösung dieser Aufgabe ist erfindungsgemäss vorgesehen, dass zumindest ein erstes Antriebssystem für die Zentrierbacken und zumindest ein separates und unabhängig vom ersten Antriebssystem betätigbares zweites Antriebssystem für das oder die Abisoliermesser vorhanden ist. Dabei ist das oder sind die Abisoliermesser und deren Antriebssystem einschliesslich des Antriebsmotors auf einem im Wesentlichen parallel zur Drehachse des Abisolierkopfes motorisch verfahrbaren Abzugsschlitten angebracht. Damit ist äusserste Flexibilität im Bearbeitungsprozess ermöglicht, wobei beispielsweise unabhängig vom Abisolieren die Zentrierbacken auch als Vertwistwerkzeug eingesetzt werden können, um Litzen zu verdrillen. Da der Antriebsmotor bei der Abzugsbewegung für die mittels der Abisoliermesser abgetrennte Leiterumhüllung mitbewegt werden kann, ist die Auslegung des Antriebssystems wesentlich einfacher, da im Antriebssystem selbst keine Abstandsveränderungen auszugleichen sind.

Bevorzugt ist dabei eine erfindungsgemässe Ausführungsform, bei welcher jedes Antriebssystem einen Antriebsmotor umfasst, der entfernt von den Zentrierbacken und dem oder den Abisoliermessern positioniert ist, und bei welcher jedes Antriebssystem weiters eine Betätigungsanordnung umfasst, welche die Antriebskraft des Motors auf die Zentrierbacken bzw. das oder jedes Abisoliermesser überträgt. Damit kann der Antriebsmotor baulich und betreffend Montage optimal ausgelegt und platziert werden, während der Abisolierkopf sehr schlank, klein und leicht gehalten werden kann.

Bevorzugt umfasst die Betätigungsanordnung einen Drehhebel, welcher ein Abisoliermesser oder eine Zentrierbacke trägt und welcher auf einer parallel zur Drehachse des Abisolierkopfes orientierten, davon radial beabstandeten und um diese Drehachse mitrotierenden Welle drehfest angebracht ist, welche Welle durch den Antriebsmotor betätigbar ist.

Eine vorteilhafte Weiterbildung der Erfindung sieht vor, dass die Welle für ein Abisoliermesser koaxial mit der Welle für eine Zentrierbacke geführt ist und beide Wellen gegeneinander verdrehbar sind.

Eine bevorzugte Ausführungsform der Erfindung ist weiters dadurch gekennzeichnet, dass die Welle an ihrem dem Drehhebel entgegengesetzten Ende einen drehfest montierten Druckhebel aufweist, welcher mit einer Schrägfläche zusammenwirkt, die sich koaxial zur Drehachse des Abisolierkopfes erstreckt, koaxial mit diesem mitrotiert und über den Antriebsmotor koaxial in Richtung der Drehachse verstellbar ist.

Erfindungsgemäss kann der Druckhebel mittels eines elastischen Elements, vorzugsweise einer Zugfeder, mit einer Kraft in Richtung auf die Schrägfläche hin beaufschlagt sein.

Ebenfalls im Rahmen der Erfindung ist eine Ausführungsform der Vorrichtung bei welcher die Schrägfläche auf einer koaxial zur Drehachse des Abisolierkopfes verlaufenden und mit dem Abisolierkopf mitrotierenden Stange drehfest montiert ist, an welcher Stange der stationäre Antriebsmotor angreift, wobei die Schrägfläche vorzugsweise als Konus ausgebildet ist.

Bevorzugt ist diese erfindungsgemässe Ausführungsform dadurch gekennzeichnet, dass der Antriebsmotor antriebsmässig mit einer Spindel gekoppelt ist, welche bei Drehung ein Querjoch in Längsrichtung entlang der Spindel verschiebt, wobei die Stange mit der Schrägfläche in Längsrichtung fixiert aber drehbar in diesem Querjoch gelagert ist.

Auch eine Vorrichtung stellt eine erfindungsgemässe Ausführungsform dar, bei welcher die Stange für das oder die Abisoliermesser koaxial und gegenüber der Stange für die Zentrierbacken in Längsrichtung verstellbar geführt ist.

Vorteilhafterweise kann die erfindungsgemässe Vorrichtung dadurch gekennzeichnet sein, dass das Antriebssystem, insbesondere der Antriebsmotor, derart regelbar ist, dass eine vordefinierbare Kraft über das oder die Abisoliermesser und/oder die Zentrierbacken auf den Leiter ausübbar ist.

Eine weitere erfindungsgemässe Ausführungsform sieht vor, dass ein System zur Überwachung eines Parameters des Antriebsmotors der Zentrierbacken vorhanden und mit einer Auswerteinheit gekoppelt ist, welche dazu ausgelegt ist, aus dem überwachten Parameter das Ausmass der Motorbetätigung, weiter das Ausmass der Bewegung der Zentrierbacken und damit den Aussendurchmesser des Leiters zu bestimmen.

Zur Lösung der eingangs gestellten Aufgabe ist erfindungsgemäss weiters auch ein Verfahren zum Betreiben einer Vorrichtung nach einem der vorhergehenden Absätze vorgesehen. Dazu ist die Vorrichtung zusätzlich im Innenbereich des Abisolierkopfes mit einem Anschlag für das Ende des Leiters als Auslöser für den Bearbeitungsvorgang versehen. Das Verfahren umfasst das Klemmen des Leiters mittels der Spannbacken, wonach der Abisolierkopf in Rotation versetzt wird, sowie das Zentrieren des Leiters mittels der Zentrierbacken und das Einschneiden in die Umhüllung des Leiters mittels des zumindest einen Abisoliermessers.

Erfindungsgemäss ist dieses Verfahren nun dadurch gekennzeichnet, dass die Zentrierbacken nach Einführen des Leiters nur soweit geschlossen werden, dass keine komplette Fixierung des Leiters erfolgt, und dass anschliessend das Kabelende mit dem Auslöser detektiert wird.

Eine alternative Variante für ein Verfahren zum Betreiben einer Vorrichtung nach einem der obigen Absätze ist für eine Vorrichtung vorgesehen, welche zusätzlich im Innenbereich des Abisolierkopfes mit einem Anschlag für das Ende des Leiters als Auslöser für den Bearbeitungsvorgang versehen ist, umfassend das Klemmen des Leiters mittels der Spannbacken, wonach der Abisolierkopf in Rotation versetzt wird, sowie das Zentrieren des Leiters mittels der Zentrierbacken.

Dieses Verfahren ist dann erfindungsgemäss dadurch gekennzeichnet, dass anschliessend an das Einschneiden das abgetrennte Isolationsstück mittels des oder der Abisoliermesser leicht vorgezogen, anschliessend das Isolationsstück mittels der Zentrierbacken geklemmt und schliesslich mit einer definierten Rotationsgeschwindigkeit des Abisolierkopfes abgezogen und verdrillt wird.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:

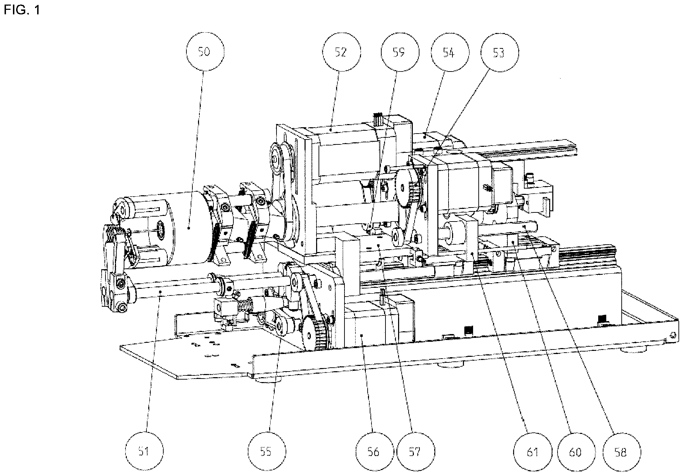

Fig. 1 eine erfindungsgemäss Ausführungsform einer Vorrichtung zum Entfernen wenigstens einer Lage der Umhüllung von elektrischen Leitern oder Lichtleitern in einer Übersichtsdarstellung, und

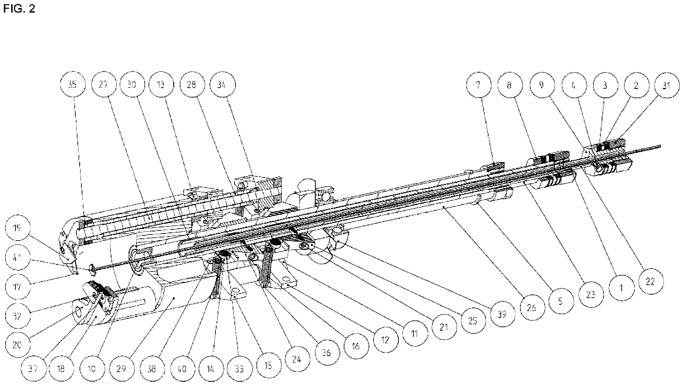

Fig. 2 eine erfindungsgemässe Ausführungsform allein der Betätigungsanordnung für die Zentrierbacken und Abisoliermesser der Vorrichtung der Fig. 1 in vergrössertem Massstab.

Typische Vorrichtungen zum Entfernen wenigstens einer Lage der Umhüllung von elektrischen Leitern oder Lichtleitern sind Abisoliermaschinen oder entsprechende Systeme innerhalb grösserer Kabelbearbeitungsmaschinen. Neben zumindest zwei radial zum Leiter bewegbaren Spannbacken einer Klemmeinheit 51 zur Fixierung des Leiters in Längsrichtung ist ein rotativer Abisolierkopf 50 vorgesehen. Im Abisolierkopf 50, der im Betrieb über einen Antriebsmotor 52 in Drehung versetzt werden kann, finden die Zentrierung des Leiters und das Abisolieren statt, wofür eigene Antriebe 53, 54 vorgesehen sind. Ebenso ist ein separater Antrieb 55 für die Klemmeinheit 51 vorhanden. Ein weiterer Antrieb 56 sorgt für die Bewegung in der Längsachse des Abisolierkopfes 50, in welcher auch der zu bearbeitende Leiter zu liegen kommt, um das abgetrennte Stück der Umhüllung des Leiters axial von diesem abzuziehen.

Am rotierenden Körper 29 des Abisolierkopfes 50 sind zumindest ein um die Drehachse des Abisolierkopfes 50 drehbares und radial in Bezug auf die Drehachse bewegbares Abisoliermesser 17 zur Durchtrennung zumindest einer Lage der Umhüllung des Leiters und zumindest zwei in Bezug auf die Drehachse des Abisolierkopfes 50 radial bewegbare und unmittelbar bei dem oder den Messer(n) 17 angeordnete Zentrierbacken 19 zur Zentrierung des Leiters in der Drehachse des Abisolierkopfes 50 montiert. Die Abisoliermesser 17 werden auch zum Abziehen des abgetrennten Stückes der Umhüllung des Leiters verwendet, indem sie axial relativ zu der Klemmeinheit 51 bewegbar sind, wozu sie vorzugsweise auf einem motorisch bewegbaren Abzugsschlitten 57 angebracht bzw. mit diesem operativ verbunden sind.

Die Betätigungsaktion für die Zentrierbacken wird vom Antriebsmotor 54 über ein erstes Zugrohr 22 in Richtung Abisolierkopf 50 übertragen. Die Betätigungsaktion für das oder die Abisoliermesser wird vom Antriebsmotor 53 über ein zweites Zugrohr 23 in Richtung Abisolierkopf 50 übertragen. Dabei ist das erste Zugrohr 22 axial verschiebbar und relativ verdrehbar, gelagert beispielsweise über ein Gleitlager 1, innerhalb des zweiten Zugrohres 23 geführt. Beide Zugrohre 22, 23 sind ihrerseits in der Hauptwelle 26 axial verschiebbar und relativ dazu verdrehbar geführt. Das Zugrohr 23 für die Messerbetätigung ist am dem Abisolierkopf 50 entgegengesetzten Ende in einem Achsiallager 8 und das Zugrohr 22 für die Betätigung der Zentrierbacken in einem Achsiallager 9 gelagert.

Mittels des Antriebsmotors 52 wird die Hauptwelle 26, die im vorderen, dem schweren Abisolierkopf näheren Bereich in einem Kugellager 39 drehbar gelagert ist, in Drehung versetzt, und damit auch der auf der Hauptwelle 26 drehfest montierte Körper 29 zusammen mit den darauf angebrachten Elementen der Antriebssysteme für die Zentrierbacken 19 bzw. die Abisoliermesser 17.

Für das Einschneiden und auch Abziehen der Umhüllung des Leiters werden vorzugsweise als Schrägmesser ausgeführt Abisoliermesser 17 verwendet, die auf einem Messerhalter 18 montiert sind. Dieser Messerhalter 18 stellt einen Drehhebel dar, der drehfest auf einer Messerwelle 28 montiert ist. Diese Messerwelle 28 verläuft parallel zur Drehachse des Abisolierkopfes 50 und trägt am dem Messer 17 abgewandten Ende einen Druckhebel 15, der ebenfalls drehfest auf der Messerwelle 28 montiert ist.

In gleicher Weise ist auch jede der Zentrierbacken 19 auf einem als Drehhebel anzusehenden Zentrierbackenhalter 20 angebracht, welcher seinerseits drehfest auf einer Zentrierbackenwelle 27 befestigt ist. Auch die Zentrierbackenwelle 27 verläuft parallel zur Drehachse des Abisolierkopfes 50 und trägt am der Zentrierbacke 19 abgewandten Ende einen Druckhebel 12, der ebenfalls drehfest auf der Zentrierbackenwelle 27 montiert ist. Dabei verläuft die Zentrierbackenwelle 27 koaxial innerhalb der Messerwelle 28 und relativ verdrehbar zu dieser.

Am vorderen Ende des Zugrohres 22, also jenem Ende, das sich im Bereich des Abisolierkopfes 50, vorzugsweise innerhalb von dessen Abmessungen, befindet, ist eine sich axial zum Zugrohr 22 erstreckende und mit diesem mitrotierende Schrägfläche 25 in Form eines sich axial aufweitenden Konus befestigt. An dieser Schrägfläche 25 liegt das Ende des Druckhebels 12 an, der bei einer axialen Verschiebung der Schrägfläche 25 ausgelenkt wird und damit über die Zentrierbackenwelle 27 vermittelt auch die Zentrierbacken 19 betätigt und in Richtung der Drehachse des Abisolierkopfes 50 hin mit einer durch den Antriebsmotor 54 vorgebbaren Kraft beaufschlagt. Der Druckhebel 12 wird weiters in Richtung auf die Schrägfläche 25 hin durch ein Federelement 16 beaufschlagt. Damit ist eine spielfreie Betätigung sichergestellt und bei Zurückziehen der Schrägfläche 25 beaufschlagt das Federelement 16 den Druckhebel 12 wieder in die Ausgangsstellung, so dass die Zentrierbacken 19 wieder von der Drehachse des Abisolierkopfes 50 nach aussen wegschwenken.

Am vorderen Ende des anderen Zugrohres 23, auch hier also an jenem Ende, das sich im Bereich des Abisolierkopfes 50, vorzugsweise innerhalb von dessen Abmessungen, befindet, ist eine weitere, sich axial zum Zugrohr 23 erstreckende und mit diesem mitrotierende Schrägfläche 24, vorzugsweise ebenfalls in Form eines sich axial aufweitenden Konus befestigt. An dieser Schrägfläche 24 liegt das Ende des anderen Druckhebels 15 an, der bei einer axialen Verschiebung der Schrägfläche 24 ausgelenkt wird und damit über die Messerwelle 28 vermittelt auch die Abisoliermesser 17 betätigt und in Richtung der Drehachse des Abisolierkopfes 50 hin mit einer durch den Antriebsmotor 53 vorgebbaren Kraft beaufschlagt. Der Druckhebel 15 wird weiters in Richtung auf die Schrägfläche 24 hin durch ein Federelement 40 beaufschlagt. Damit ist auch hier eine spielfreie Betätigung sichergestellt und bei Zurückziehen der Schrägfläche 24 beaufschlagt das Federelement 40 den Druckhebel 15 wieder in die Ausgangsstellung, so dass die Abisoliermesser 17 wieder von der Drehachse des Abisolierkopfes 50 nach aussen wegschwenken.

Aufgrund der unabhängig betätigbaren Antriebsmotoren 53 und 54, sowie der Tatsache, dass zwar deren Antriebskräfte über die Antriebssysteme 22, 27, 12 25, 20 bzw. 23, 28, 15, 24, 18 betreffend des Kraftflusses parallel verlaufend zu den Zentrierbacken 19 bzw. Abisoliermessern 17 übertragen werden, die Antriebssysteme aber dennoch wirkungsmässig komplett voneinander unabhängig sind, können auch die Zentrierbacken 19 völlig unabhängig von den Abisoliermessern 17 betätigt werden.

Bevorzugt ist diese erfindungsgemässe Ausführungsform dadurch gekennzeichnet, dass die Antriebsmotoren 53 und 54 antriebsmässig mit einer der Spindeln 58 und 59 gekoppelt sind, welche bei Drehung eines der beiden Querjoche 60 und 61 in Längsrichtung entlang der Spindeln 58 und 59 verschiebt, wobei die Stangen 22 und 23 mit der Schrägflächen 24 und 25 in Längsrichtung mit einer Lagerung 8 und 9 fixiert aber drehbar in einem dieser Querjoche 60 und 61 gelagert sind.

Zumindest die Antriebsmotoren 53, 54 sind vorzugsweise derart regelbar ist, dass eine vordefinierbare Kraft über das oder die Abisoliermesser 17 und/oder die Zentrierbacken 19 auf den Leiter ausübbar ist. Vorzugsweise ist ein System zur Überwachung eines Parameters des Antriebsmotors 54 der Zentrierbacken 19 vorhanden und mit einer Auswerteinheit gekoppelt, in welcher aus diesem überwachten Parameter das Ausmass der Motorbetätigung ermittelt werden kann. Daraus ist dann weiter das Ausmass der Bewegung der Zentrierbacken 19 und damit den Aussendurchmesser des Leiters bestimmbar.

Der Bearbeitungsvorgang für einen Leiter mit einer umhüllenden Isolierung mit der oben erläuterten Vorrichtung umfasst zuerst das Klemmen des Leiters mittels der Spannbacken der Klemmeinrichtung 51, wonach der Abisolierkopf 50 in Rotation versetzt wird. Dann erfolgt das Zentrieren des Leiters mittels der Zentrierbacken 19 und das Einschneiden in die Umhüllung des Leiters mittels des zumindest einen Abisoliermessers 17. Die Zentrierbacken 19 werden vorteilhafterweise nach Einführen des Leiters nur soweit geschlossen, dass keine komplette Fixierung des Leiters erfolgt.

Der eigentliche Abisoliervorgang wird besonders vorteilhaft durch Anstossen des vorderen Leiterendes an einem Anschlag eingeleitet, welcher zusätzlich im Innenbereich des Körpers 29 des Abisolierkopfes 50 als Auslöser vorgesehen ist.

Aufgrund der unabhängigen Betätigungsmöglichkeit für die Zentrierbacken 19 und die Abisoliermesser 17 kann auch ein Verfahren durchgeführt werden, bei welchem anschliessend an das Einschneiden das abgetrennte Isolationsstück mittels des oder der Abisoliermesser 17 leicht vorgezogen, anschliessend das Isolationsstück mittels der Zentrierbacken 19 komplett durch Anliegen an dieses abgeschnittene Stück der Umhüllung des Leiters geklemmt und schliesslich mit einer definierten Rotationsgeschwindigkeit des Abisolierkopfes 50 abgezogen und verdrillt wird.

Weitere Vorteile, die mit der oben erläuterten Vorrichtung erzielt werden können:
Der Innenleiter kann durch die Zentrierbacken nicht mehr ungewollt verdrillt werden.

Zum bewussten Verdrillen des Innenleiters sind nun keine speziellen Zentrierbacken und härtere Zentrierfedern mehr nötig.

Es kann eine genauere Abisolierlänge des Kabels erreicht werden, wenn das Kabel mit den Zentrierbacken vorzentriert und anschliessend mit dem Auslöser das Kabelende detektiert wird.

Mit derselben Maschine kann nun sowohl verdrillt als auch präzise abisoliert werden.

Die Zentrierbacken können die Isolation, die Abschirmung und den Leiter beim Einschneiden nicht mehr beschädigen, da die Zentrierbacken nicht mehr mit den Messer gekoppelt sind und somit keinen Druck mehr ausüben.

### Liste der Bezugszeichen

1 Gleitlager
2 Gegenscheibe
3 Axial Kugelkäfig
4 Spez. Schraube
5 Sicherungsring
6 Isolierhülse
7 Mutter
8 Achsiallager "Messer"
9 Achsiallager "Zentrierung"
10 Trichter
11 Achsfixierung "Zentrierbacken"
12 Zentrierbackenhebel
13 Achsfixierung "Messer"
14 Lagerbolzen
15 Messerhebel
16 Zugfeder
17 Schrägmesser
18 Messerhalter
19 Zentrierbacke
20 Zentrierbackenhalter
21 Spez. Schraube "Zentrierbacken"
22 Zugrohr "Zentrierbacken"
23 Zugrohr "Messer"
24 Konus
25 Konus
26 Hauptwelle
27 Zentrierbackenwelle
28 Messerwelle
29 Körper
30 Gleitlager
31 Sicherungsmutter
32 Senkschraube
33 Kugellager
34 Gleitlager
35 Pass-Scheibe
36 Passkerbstift
37 Senkschraube
38 Zylinderschraube
39 Kugellager
40 Zugfeder
41 Auslöser
50 Abisoliereinheit
54 Zentrierachse
51 Klemmeinheit
55 Klemmachse
52 Rotationsachse
56 Abzugsachse
53 Schneidachse
57 Abzugsschlitten
58 Spindel
59 Spindel
60 Querjoch
61 Querjoch

## Patentansprüche

1. Vorrichtung zum Entfernen wenigstens einer Lage der Umhüllung von elektrischen Leitern oder Lichtleitern, mit zumindest zwei zum Leiter bewegbaren Spannbacken zur Fixierung des Leiters in Längsrichtung und mit einem rotativen Abisolierkopf (50), der einen rotierenden Körper (29) aufweist, wobei der Abisolierkopf (50) zumindest ein um die Drehachse des Abisolierkopfes (50) drehbares und radial in Bezug auf die Drehachse bewegbares Abisoliermesser (17) zur Durchtrennung zumindest einer Lage der Umhüllung des Leiters aufweist, wobei das zumindest eine Abisoliermesser (17) am rotierenden Körper (29) montiert ist, mit einem ersten Antriebssystem für das oder die Abisoliermesser (17),
**dadurch gekennzeichnet, dass**
der Absiolierkopf (50) zumindest zwei in Bezug auf die Drehachse des Abisolierkopfes (50) bewegbare und unmittelbar bei dem oder den Messer(n) angeordnete Zentrierbacken (19) zur Zentrierung des Leiters in der Drehachse des Abisolierkopfes (50) aufweist, wobei die zumindest zwei Zentrierbacken (19) am rotierenden Körper (29) montiert sind, mit zumindest einem separaten und unabhängig vom ersten Antriebssystem betätigbarem zweiten Antriebssystem für die Zentrierbacken (19), wobei das oder die Abisoliermesser (17) und deren Antriebssystem (23, 28, 15, 24, 18) einschliesslich des Antriebsmotors (53) auf einem in Richtung der Drehachse des Abisolierkopfes (50) motorisch verfahrbaren Abzugsschlitten (57) angebracht ist..

2. Vorrichtung nach Anspruch 1, **dadurch gekennzeichnet, dass** jedes Antriebssystem einen Antriebsmotor (53, 54) umfasst, der entfernt von den Zentrierbacken (19) und dem oder den Abisoliermessern (17) positioniert ist, und jedes Antriebssystem weiters eine Betätigungsanordnung (22, 27, 12 25, 20 bzw. 23, 28, 15, 24, 18) umfasst, welche die Antriebskraft des Motors (53, 54) auf die Zentrierbacken (19) bzw. das oder jedes Abisoliermesser (17) überträgt.

3. Vorrichtung nach Anspruch 1 oder 2, **dadurch gekennzeichnet, dass** die Betätigungsanordnung einen Drehhebel (18 bzw. 20) umfasst, welcher ein Abisoliermesser (17) oder eine Zentrierbacke (19) trägt und welcher auf einer parallel zur Drehachse des Abisolierkopfes (50) orientierten, davon radial beabstandeten und um diese Drehachse mitrotierenden Welle (27 bzw. 28) drehfest angebracht ist, welche Welle durch den Antriebsmotor (53 bzw. 54) betätigbar ist.

4. Vorrichtung nach Anspruch 3, **dadurch gekennzeichnet, dass** die Welle (28) für ein Abisoliermesser (17) koaxial mit der Welle (27) für eine Zentrierbacke (19) geführt ist und beide Wellen (27, 28) gegeneinander verdrehbar sind.

5. Vorrichtung nach einem der Ansprüche 3 oder 4, **dadurch gekennzeichnet, dass** die Welle (27 bzw. 28) an ihrem dem Drehhebel (18, 20) entgegengesetzten Ende einen drehfest montierten Druckhebel (12 bzw. 15) aufweist, welcher mit einer Schrägfläche (24 bzw. 25) zusammenwirkt, die sich koaxial zur Drehachse des Abisolierkopfes (50) erstreckt, koaxial mit diesem mitrotiert und über den Antriebsmotor (53, 54) koaxial in Richtung der Drehachse verstellbar ist.

6. Vorrichtung nach einem der Ansprüche 2 bis 5, **dadurch gekennzeichnet, dass** der Druckhebel (12, 15) mittels eines elastischen Elements, vorzugsweise einer Zugfeder (16), mit einer Kraft in Richtung auf die Schrägfläche (24, 25) hin beaufschlagt ist.

7. Vorrichtung nach Anspruch 6, **dadurch gekennzeichnet, dass** die Schrägfläche (24, 25) auf einer koaxial zur Drehachse des Abisolierkopfes (50) verlaufenden und mit dem Abisolierkopf mitrotierenden Stange (22, 23) drehfest montiert ist, an welcher Stange (22, 23) der stationäre Antriebsmotor (53, 54) angreift, wobei die Schrägfläche vorzugsweise als Konus ausgebildet ist.

8. Vorrichtung nach Anspruch 7, **dadurch gekennzeichnet, dass** der Antriebsmotor (53, 54) antriebsmässig mit einer Spindel (58, 59) gekoppelt ist, welche bei Drehung ein Querjoch (60,61) in Längsrichtung entlang der Spindel (58, 59) verschiebt, wobei die Stange (22, 23) mit der Schrägfläche (24, 25) in Längsrichtung fixiert aber drehbar in diesem Querjoch (60, 61) gelagert ist.

9. Vorrichtung nach Anspruch 7 oder 8, **dadurch gekennzeichnet, dass** die Stange (23) für das oder die Abisoliermesser (17) koaxial und gegenüber der Stange (22) für die Zentrierbacken (19) in Längsrichtung verstellbar geführt ist.

10. Vorrichtung nach einem der Ansprüche 1 bis 9, **dadurch gekennzeichnet, dass** das Antriebssystem, insbesondere der Antriebsmotor (53, 54), derart regelbar ist, dass eine vordefinierbare Kraft über das oder die Abisoliermesser (17) und/oder die Zentrierbacken (19) auf den Leiter ausübbar ist.

11. Vorrichtung nach einem der Ansprüche 1 bis 10, **dadurch gekennzeichnet, dass** ein System zur Überwachung eines Parameters des Antriebsmotors (54) der Zentrierbacken (19) vorhanden und mit einer Auswerteinheit gekoppelt ist, welche dazu ausgelegt ist, aus dem überwachten Parameter das Ausmass der Motorbetätigung, weiter das Ausmass der Bewegung der Zentrierbacken (19) und damit den Aussendurchmesser des Leiters zu bestimmen.

12. Verfahren zum Betreiben einer Vorrichtung nach einem der Ansprüche 1 bis 11, welche zusätzlich im Innenbereich des Abisolierkopfes (50) mit einem Anschlag (41) für das Ende des Leiters als Auslöser für den Bearbeitungsvorgang versehen ist, umfassend das Klemmen des Leiters mittels der Spannbacken (51), wonach der Abisolierkopf (50) in Rotation versetzt wird, sowie das Zentrieren des Leiters mittels der Zentrierbacken (19) und das Einschneiden in die Umhüllung des Leiters mittels des zumindest einen Abisoliermessers (17),
**dadurch gekennzeichnet, dass**
die Zentrierbacken (19) nach Einführen des Leiters nur soweit geschlossen werden, dass keine komplette Fixierung des Leiters erfolgt, und dass anschliessend das Kabelende mit dem Auslöser (41) detektiert wird.

## Claims

1. An apparatus for removing at least one layer of the sheath of electrical conductors or light guides, having at least two clamping jaws which can be moved towards the conductor for fixing the conductor in the longitudinal direction, and having a rotary stripping head (50) which has a rotating body (29), wherein the stripping head (50) has at least one stripping blade (17) which can rotate about the axis of rotation of the stripping head (50) and can be moved radially relative to the axis of rotation for cutting through at least one layer of the cladding of the conductor, wherein the at least one stripping blade (17) is mounted on the rotating body (29), having a first drive system for the one or more stripping blade(s) (17),
**characterized in that**
the stripping head (50) has at least two centring jaws (19) which can be moved relative to the axis of rotation of the stripping head (50) and are arranged directly at the blade or blades for centring the conductor in the axis of rotation of the stripping head (50), wherein the at least two centring jaws (19) are mounted on the rotating body (29), with at least one separate second drive system which can be actuated independently of the first drive system the centring jaws (19), wherein the one or more stripping blade(s) (17) and their drive system (23, 28, 15, 24, 18) including the drive motor (53) is/are mounted on a drawing carriage (57) which can be displaced by a motor in the direction of the axis of rotation of the stripping head (50).

2. The apparatus according to Claim 1, **characterized in that** each drive system comprises a drive motor (53, 54) which is positioned remote from the centring jaws (19) and the one or more stripping blade(s) (17), and each drive system further comprises an actuator assembly (22, 27, 12, 25, 20 and 23, 28, 15, 24, 18), which transmits the driving force of the motor (53, 54) to the centring jaws (19) and/or to the one or more stripping blade(s) (17).

3. The apparatus according to Claim 1 or 2, **characterized in that** the actuating arrangement comprises a rotary lever (18 or 20) which supports a stripping blade (17) or a centring jaw (19) and is mounted for co-rotation on a shaft (27 or 28) which is orientated parallel to the axis of rotation of the stripping head (50) and is radially at a distance therefrom and rotates therewith about said axis of rotation, which shaft can be actuated by the drive motor (53 or 54).

4. The apparatus according to Claim 3, **characterized in that** the shaft (28) for a stripping knife (17) is aligned coaxially with the shaft (27) for a centring jaw (19), and both shafts (27, 28) are mutually rotatable.

5. The apparatus according to either of Claims 3 or 4, **characterized in that** the shaft (27 or 28) has a pressure lever (12 or 15) which is mounted for co-rotation on the end thereof opposite the rotary lever (18, 20), which pressure shaft cooperates with an inclined surface (24 or 25) that extends coaxially with the axis of rotation of the stripping head (50) rotates coaxially therewith and is displaceable in the direction of the axis of rotation via the drive motor (53, 54).

6. The apparatus according to any one of claims 2 to 5, **characterized in that** the pressure lever (12, 15) is acted upon by force in the direction of the inclined surface (24, 25) via elastic element, preferably a tension spring (16).

7. The apparatus according to claim 6, **characterized in that** the inclined surface (24, 25) is mounted for co-rotation on a rod (22, 23) which extends coaxially to the axis of rotation of the stripping head (50) and rotates with the stripping head, which rod (22, 23) is engaged by the stationary drive motor (53, 54), wherein the inclined surface preferably has the form of a cone.

8. The apparatus according to Claim 7, **characterized in that** the drive motor (53, 54) is coupled in driving manner to a spindle (58, 59) which upon rotation displaces a transverse yoke (60, 61) in the longitudinal direction of the spindle (58, 59), wherein the rod (22, 23) is mounted so as to be longitudinally fixed with the inclined surface (24, 25) but rotatable in said transverse yoke (60, 61).

9. The apparatus according to Claim 7 or 8, **characterized in that** the rod (23) is guided coaxially for the one or more stripping blade (s) (17) and adjustably in the longitudinal direction relative to the rod (22) for the centring jaws (19).

10. The apparatus according to any one of claims 1 to 9, **characterized in that** the drive system, in particular the drive motor (53, 54) is controllable in such manner that a predefinable force can be exerted on the conductor via the one or more stripping blade (s) (17) and/or the centring jaws (19).

11. The apparatus according to any one of Claims 1 to 10, **characterized in that** a system for monitoring a parameter of the drive motor (54) of the centring jaws (19) is present and coupled to an evaluation unit, which is designed to determine the degree of motor actuation from the monitored parameter as well as the extent of movement of the centring jaws (19) and therewith the outer diameter of the conductor.

12. A method for operating an apparatus according to any one of Claims 1 to 11, which is also provided in the internal area of the stripping head (50) with a limit stop (41) for the end of the conductor as a trigger for the processing operation, comprising the clamping of the conductor by means of the clamping jaws (51), after which the stripping head (50) is caused to rotate, and the centring of the conductor by means of the centring jaws (19) and the cutting into the sheath of the conductor by means of at least one stripping blade (17),
**characterized in that**
after insertion of the conductor the centring jaws (19) are only closed to the extent that the conductor is not completely immobilised, and that the cable end is subsequently detected with the trigger (41).

## Revendications

1. Dispositif destiné à enlever au moins une couche de la gaine de câbles électriques ou fibres optiques, avec au moins deux mâchoires de serrage mobiles par rapport au câble pour fixer le câble dans le sens longitudinal et avec au moins une tête de dénudage rotative (50), qui comporte un corps tournant (29), la tête de dénudage (50) comportant au moins un couteau à dénuder (17) pouvant tourner autour de l'axe de rotation de la tête de dénudage (50) et mobile radialement par rapport à l'axe de rotation pour séparer au moins une couche de la gaine du câble, au moins un couteau à dénuder (17) étant monté sur le corps tournant (29), avec un premier système d'entraînement pour le ou les couteau(x) à dénuder (17),
**caractérisé en ce que**
la tête de dénudage (50) comporte au moins deux mâchoires de centrage (19) mobiles par rapport à l'axe de rotation de la tête de dénudage (50) et disposées directement près du ou des couteau(x) à dénuder pour centrer le câble dans l'axe de rotation de la tête de dénudage (50), au moins les deux mâchoires de centrage (19) étant montées sur la tête rotative (29), avec au moins un deuxième système d'entraînement pour les mâchoires de centrage (19) séparé et pouvant être actionné indépendamment du premier système d'entraînement, le ou les couteau (x) à dénuder (17) et le système d'entraînement de ceux-ci (23, 28, 15, 24, 18) y compris du moteur d'entraînement (53) étant montés sur un chariot de retrait (57) pouvant être déplacé avec un moteur en direction de l'axe de rotation de la tête de dénudage (50).

2. Dispositif selon la revendication 1, **caractérisé en ce que** chaque système d'entraînement comprend un moteur d'entraînement (53, 54), qui est positionné éloigné des mâchoires de centrage (19) et du ou des couteau (x) à dénuder (17) et chaque système d'entraînement comprend en plus un système d'actionnement (22, 27, 12, 25, 20 ou 23, 28, 15, 24, 18), lequel transmet la force d'entraînement du moteur (53, 54) aux mâchoires de centrage (19) ou au ou à chaque couteau à dénuder (17).

3. Dispositif selon la revendication 1 ou 2, **caractérisé en ce que** le système d'actionnement comprend un levier rotatif (18 ou 20), lequel porte un couteau à dénuder (17) ou une mâchoire de centrage (19) et lequel est monté solidaire en rotation sur un arbre (27 ou 28) orienté parallèle à l'axe de rotation de la tête de dénudage (50), radialement à distance de celui-ci et tournant conjointement autour de cet axe de rotation, lequel arbre pouvant être actionné par le moteur d'entraînement (53 ou 54).

4. Dispositif selon la revendication 3, **caractérisé en ce que** l'arbre (28) pour un couteau à dénuder (17) est guidé coaxialement avec l'arbre (27) pour une mâchoire de centrage (19) et les deux arbres (27, 28) peuvent être tournés l'un contre l'autre.

5. Dispositif selon l'une quelconque des revendications 3 ou 4, **caractérisé en ce que** l'arbre (27 ou 28) comporte à son extrémité opposée au levier rotatif (18, 20) un levier de pression (12 ou 15) monté solidaire en rotation, lequel coopère avec une surface inclinée (24 ou 25), qui s'étend coaxialement à l'axe de rotation de la tête de dénudage (50), tourne conjointement coaxialement avec celui-ci et peut être déplacé par le biais du moteur d'entraînement (53, 54) coaxialement en direction de l'axe de rotation.

6. Dispositif selon l'une quelconque des revendications 2 à 5, **caractérisé en ce que** le levier de pression (12, 15) est sollicité avec une force en direction de la surface inclinée (24, 25) au moyen d'un élément élastique, de préférence d'un ressort de traction (16).

7. Dispositif selon la revendication 6, **caractérisé en ce que** la surface inclinée (24, 25) est montée solidaire en rotation sur une barre (22, 23) passant coaxialement à l'axe de rotation de la tête de dénudage (50) et tournant conjointement avec la tête de dénudage, barre (22, 23) sur laquelle vient en prise le moteur d'entraînement fixe (53, 54), la surface inclinée étant constituée de préférence sous la forme d'un cône.

8. Dispositif selon la revendication 7, **caractérisé en ce que** le moteur d'entraînement (53, 54) est couplé du point de vue entraînement à une broche (58, 59), laquelle déplace lors de la rotation une culasse transversale (60, 61) en direction longitudinale le long de la broche (58, 59), la barre (22, 23) étant fixée à la surface inclinée (24, 25) en direction longitudinale, mais étant logée pouvant tourner dans cette culasse transversale (60, 61).

9. Dispositif selon la revendication 7 ou 8, **caractérisé en ce que** la barre (23) est guidée pouvant être déplacée en direction longitudinale pour le ou les couteaux à dénuder (17) coaxialement et opposée à la barre (22) pour les mâchoires de centrage (19).

10. Dispositif selon l'une quelconque des revendications 1 à 9, **caractérisé en ce que** le système d'entraînement, notamment le moteur d'entraînement (53, 54), peut être réglé de telle sorte qu'une force préalablement définissable peut être exercée sur le câble par le biais du ou des couteaux à dénuder (17) et/ou des mâchoires de centrage (19).

11. Dispositif selon l'une quelconque des revendications 1 à 10, **caractérisé en ce qu'**il y a un système pour le contrôle d'un paramètre du moteur d'entraînement (54) des mâchoires de centrage (19) et qui est couplé à une unité d'exploitation, laquelle est conçue pour déterminer à partir du paramètre surveillé l'importance de la commande du moteur, ensuite l'importance du mouvement des mâchoires de centrage (19) et de déterminer de ce fait le diamètre extérieur du câble.

12. Procédé destiné à faire fonctionner un dispositif selon l'une quelconques des revendications 1 à 11, lequel est doté en plus dans la zone intérieur de la tête de dénudage (50) d'une butée (41) pour l'extrémité du câble en tant que déclencheur pour l'opération de transformation, comprenant le serrage du câble au moyen des mâchoires de serrage (51), la tête de dénudage (50) étant mise en rotation de ce fait, et le centrage du câble au moyen des mâchoires de centrage (19) et l'entaillage dans la gaine du câble au moyen d'au moins un couteau à dénuder (17),
**caractérisé en ce que**
les mâchoires de centrage (19) ne sont seulement fermées après introduction du câble que dans la mesure où aucune fixation complète du câble n'a lieu et qu'ensuite l'extrémité de câble est détectée avec le déclencheur (41).
